# EUROPEAN PATENT SPECIFICATION

(11) **EP 1 154 391 B1**
(45) Date of publication and mention of the grant of the patent: **24.01.2007**
(21) Application number: 00956795.9
(22) Date of filing: 30.08.2000
(51) Int. Cl.: G09F 3/02, G09F 3/10, G06K 19/00, G06K 19/077

(54) **ADHESION LABEL**
KLEBEETIKETT
ETIQUETTE D'ADHESION

(30) Priority: 31.08.1999 JP 24449199
(43) Date of publication of application: 14.11.2001
(73) Proprietor: Lintec Corporation, Tokyo (JP)
(72) Inventor: ICHIKAWA, Akira Lintec Corporation, Itabashi-ku, Tokyo 173-0001 (JP); TAGUCHI, Katsuhisa Lintec Corporation, Itabashi-ku, Tokyo 173-0001 (JP)
(74) Representative: Cohausz & Florack
(86) International application number: PCT/JP2000/005863
(87) International publication number: WO 2001/016923

(56) References cited:
- EP-A- 0 827 108
- WO-A-98/09252
- GB-A- 1 356 426
- GB-A- 2 310 977
- JP-A- 10 208 003
- JP-A- 11 184 995
- JP-A- 11 231 782
- JP-A- 2000 207 513
- PATENT ABSTRACTS OF JAPAN vol. 1998, no. 11, 30 September 1998 (1998-09-30) & JP 10 163606 A (MATSUSHITA ELECTRIC IND CO LTD), 19 June 1998 (1998-06-19)

## Description

### TECHNICAL FIELD

The present invention relates to an adhesive label, more particularly to a contactless data carrier adhesive label. The present invention may be advantageously applied to a contactless data carrier or a radio frequency identification card in the form of an adhesive label.

### BACKGROUD ART

A contactless data carrier system includes a data carrier (a transponder) and an interrogator, and a data transmission is made without contact therebetween. The contactless data carrier system, in the form of an adhesive label, is applied, for example, to management of articles to be distributed, by sticking an adhesive label-type data carrier or transponder on a surface of an article, such as personal baggage, to be distributed, or the management of FA (Factory Automation) by sticking an adhesive label-type data carrier or transponder on a surface of a machine component in an assembly-line operation.

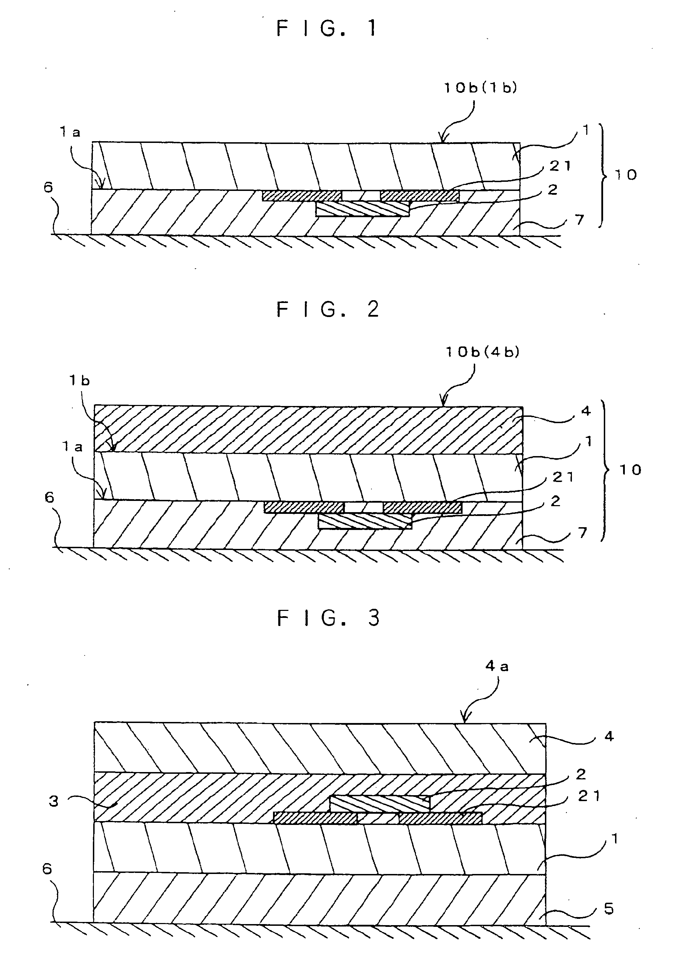

As shown in Fig. 3, a typical conventionally used adhesive label-type data carrier has a structure such that a contactless data carrier element mounted on a surface of a circuit substrate 1 is sealed with a resin layer 3, and a surface layer 4 is laminated on the resin layer 3. The contactless data carrier element contains, for example, an electric circuit 21 and electronic components 2 such as an IC chip, a capacitor, a battery and so on. In general, an entire contactless data carrier element is formed on one side of the circuit substrate 1, as shown in Fig. 3. alternatively, the contactless data carrier element may be prepared by separately forming a part of an electric circuit on each side of the circuit substrate 1, and connecting one to the other via a through-hole, to thus integrate the separately formed parts into a sole contactless data carrier element.

Further, as shown in Fig. 3, an adhesive layer 5 is provided on a reverse side of the circuit substrate 1 of the adhesive label-type data carrier. The adhesive label-type data carrier is temporarily applied on a release sheet (not shown). When employed, the adhesive label-type data carrier is peeled therefrom, and applied to a surface of an article 6. In such an adhesive label, a mark for identification and so on is generally printed on a label surface 4a, i.e., a surface 4a of the surface layer 4.

The electronic components forming the contactless data carrier element are thicker than the electric circuit, and thus, an irregular or uneven structure is formed on one surface of the circuit substrate 1. Therefore, this poses a disadvantageous problem in that the irregular or uneven structure affects the surface 4a of the surface layer 4, and a mottle of printing, such as a pin hole occurs.

EP 0 827 108 A2 describes a non-contact type data carrier label which has a data carrier for storing information and a support member for holding the data carrier and which is able to be attached to a product. On both sides of the support member adhesive layers are applied. One serves for the adhesion of the data carrier on the support member. The other for the adhesion of the data carrier label on an article. GB 2 310 977 A describes a label for security tagging of goods which comprises a flexible sheet and sensor detectable by radio frequency, electromagnetic to magnetic means wherein the sensor is placed between two sheets and wherein this laminate is applied by means of an adhesive on a backing layer.

### DISCLOSURE OF INVENTION

Accordingly, the object of the present invention is to provide an adhesive label-type contactless data carrier wherein the irregular or uneven structure formed due to the presence of electronic components on a flat circuit substrate of the contactless data carrier element is not reflected on the label surface; a thinning of the structure can be realized; and an excellent printability obtained.

The above object can be achieved by an adhesive label according to the present invention, characterized by comprising a circuit substrate, electronic components formed on one surface of the circuit substrate, and an adhesive layer on the electronic components to be applied to an article, which are sequentially laminated.

In a preferable embodiment of the present invention, the adhesive layer is a pressure sensitive adhesive layer.

In another preferable embodiment of the present invention, a surface layer is provided on a circuit substrate surface that is a reverse side to a surface carrying the electronic components.

### BRIEF DESCRIPTION OF DRAWINGS

Figure 1 is a sectional view schematically illustrating a state wherein an adhesive label as an embodiment of the present invention is applied to a surface of an article.
Figure 2 is a sectional view schematically illustrating a state wherein an adhesive label as another embodiment of the present invention is applied to a surface of an article.
Figure 3 is a sectional view schematically illustrating a state where a conventional adhesive label is applied to a surface of an article.

### BEST MODE FOR CARRYING OUT THE INVENTION

Particular embodiments of the present invention will be described hereinafter, with reference to the accompanying drawings.

Fig. 1 is a sectional view schematically illustrating a state wherein an adhesive label 10 as an embodiment of the present invention is applied to a surface of an article 6. One of main purposes of the sectional views including Fig. 1 attached to the present specification is to illustrate structures of the adhesive label. Therefore, the thickness of each layer illustrated is exaggerated, and the ratios of the layers are not precise.

The adhesive label 10 of the present invention is composed of the circuit substrate 1; the contactless data carrier element containing an electric circuit 21 and an IC chip 2, and formed on one surface 1a; and the adhesive layer 7 covering and containing the contactless data carrier element. The adhesive label 10 is stuck to and held on a surface of an article 6 by the adhesive layer 7, and thus the other surface 1b of the circuit substrate 1 becomes a label surface 10b. The label surface 10b of the adhesive label 10 of the present invention is sufficiently flat that, when stuck on a release sheet (not shown) or the article 6 via the adhesive layer 7, it can be printed without any mottle of printing.

Further, the adhesive label 10 of the present invention as shown in Fig. 1 can be made thinner in comparison with the conventional adhesive label-type data carrier. More particularly, the conventional adhesive label-type data carrier as shown in Fig. 3 has a 4-layered structure composed of the surface layer 4, the resin layer 3 covering and sealing the contactless data carrier element containing the electric circuit 21 and IC chip 2, the circuit substrate 1, and the pressure sensitive adhesive layer 5. Whereas the adhesive label 10 of the present invention as shown in Fig. 1 has a 2-layered structure composed of the circuit substrate 1, and the adhesive layer 7 covering and containing the contactless data carrier element containing the electric circuit 21 and IC chip 2. Therefore, a thickness of the adhesive label 10 of the present invention can be thinned as a whole, the number of the materials used can be reduced, the manufacturing process can be simplified, and the manufacturing cost can be reduced.

As shown in Fig. 2, a surface layer can be added onto the circuit substrate 1, when the circuit substrate 1 of the adhesive label 10 of the present invention as shown in Fig. 1 is transparent or translucent, and thus the contactless data carrier element can be unfavorably seen through the circuit substrate 1 from the label surface 10b, when the material of the circuit substrate 1 has an insufficient printability, or when a part of the electric circuit is formed on a reverse surface to the surface carrying the electronic components such as the IC chip 2. The surface layer can provide a concealing effect or printability.

Fig. 2 is a sectional view schematically illustrating a state where the adhesive label 10 as the embodiment of the present invention having the surface layer is stuck on a surface of the article 6. The adhesive label 10 as shown in Fig. 2 comprises the circuit substrate 1, the contactless data carrier element containing the electric circuit 21 and IC chip 2 and formed on one surface 1a of the circuit substrate 1, the adhesive layer 7 covering and containing the contactless data carrier element, and the surface layer 4 formed on another surface of the circuit substrate 1. In the surface layer 4, the surface 4b that does not come into contact with the circuit substrate 1 becomes the label surface 10b of the adhesive label 10. The label surface 10b of the adhesive label 10 of the present invention is sufficiently flat when stuck on a release sheet (not shown) or the article 6 via the adhesive layer 7, and therefore, can be printed without any mottle of printing. Further, a concealing effect can be obtained when an opaque material is used as the surface layer 4.

In the adhesive label 10 having the surface layer according to the present invention, as shown in Fig. 2, a part of the electric circuit may be formed on each surface of the circuit substrate 1 and connected one to the other via a through-hole, to thus integrate the separately formed parts in to a contactless data carrier element. It is preferable to form a thinner electric circuit on the side of the surface layer. A thin electric circuit can be formed, for example, by printing the surface with a silver paste, or sputtering.

The circuit substrate which may be used in the present invention is not particularly limited, so long as it will function as a support capable of stably carrying an entire contactless data carrier element or at least a part of the electronic components and the electric circuit of an entire contactless data carrier element on one surface, and maintaining a flatness, and at the same time stably carrying a part of the thin electric circuit on the other surface. The circuit substrate may be transparent, translucent, or opaque.

Specifically, the circuit substrate may be, for example, a paper, a sheet of a natural or synthetic fibrous material, such as a woven fabric sheet, a knitted fabric sheet or a non-woven fabric sheet, a synthetic resin film or sheet. As the synthetic resin, there may be mentioned, for example, polyethylene, polypropylene, polyvinyl chloride, polystyrene, polyester such as polyethylene terephthalate or polyethylene naphthalate, polybutene, polyacrylate, polymethacrylate, polyvinyl alcohol, polyvinyl butyral, polyimide, polycarbonate, polyamide, ethylene-vinyl acetate copolymer, ethylene acrylate copolymer, polyvinyl acetal, ethyl cellulose, cellulose triacetate, hydroxypropyl cellulose, or acrylonitrile-butadiene-stylene copolymer, or the like. In many cases, an internal structure of the contactless data carrier should be concealed, from a standpoint of design or security. In such a case, the circuit substrate is preferably opaque. The opaque substrate film used may be a substrate made of an opaque material, such as the above-mentioned paper or fibrous material, or a substrate prepared by opacifying the above-mentioned transparent resin film in accordance with any known conventional opacifying methods. The conventional opacifying methods may be, for example, a method wherein an opacifying agent, such as titanium oxide or calcium carbonate is incorporated to the film, a method wherein the film surface is coated or printed with the opacifying agent together with a binder, a method wherein a foaming agent is used, or a method wherein talc having a poor compatibility with the film or the like is incorporated to the film, and then the film is expanded to form micropores in the film, or the like.

The thickness of the circuit substrate is not particularly limited, but is preferably 25 µm to 200 µm.

The contactless data carrier element formed on the surface of the circuit substrate may be composed of the electronic components and the electric circuit. The electric circuit comprises lead wires and antenna coils. The electronic components include, for example, an IC chip, a battery, a capacitor, a resistor, a coil, a diode, or the like. The contactless data carrier element may be formed on one or both surfaces of the circuit substrate according to any known methods. For example, an IC chip, a battery, or a capacitor may be fixed or connected with an adhesive, a solder or an electrically conductive resin to form the contactless data carrier element. The electric circuit may be formed on one surface of the circuit substrate by printing the surface with an electrically conductive resin, sputtering a metal, or etching a metal foil that has been applied on a surface of the circuit substrate.

The adhesive layer coating the contactless data carrier element may be formed from any pressure sensitive adhesive or heat sensitive adhesive.

As the pressure sensitive adhesive used in the adhesive layer, there may be mentioned, for example, an adhesive based on natural rubber, synthetic rubber, acrylic resin, polyvinyl ether resin, urethane resin, or silicone resin. The synthetic rubber-based adhesive may be, for example, styrene-butadiene rubber, polyisobutylene rubber, isobutylene-isoprene rubber, isoprene rubber, styreneisoprene block copolymer, styrene-butadiene block copolymer, styrene-ethylene-butylene block copolymer, or the like. The acrylic resin-based adhesive may be, for example, a homopolymer or copolymer of acrylic acid, methyl acrylate, ethyl acrylate, propyl acrylate, butyl acrylate, 2-ethylhexyl acrylate, ethyl methacrylate, butyl methacrylate, acrylonitrile or the like. The polyvinyl ether resin-based adhesive may be, for example, polyvinyl ether, polyvinyl isobutyl ether or the like. The silicone resin-based adhesive may be, for example, dimethyl polysiloxane.

As the heat sensitive adhesive used in the adhesive layer, there may be mentioned, for example, an adhesive based on polyethylene, ethylene-vinyl acetate resin, polyester resin, or polyimide resin. The pressure sensitive adhesive is preferably used, because of the ease with which it can be stuck to an article.

The adhesive layer can be formed by coating the circuit substrate carrying the contactless data carrier element with the pressure sensitive adhesives or heat sensitive adhesives according to known methods, for example, by means of a roll coater, a knife coater, a die coater/blade coater, a gravure coater, a screen printing, or the like. The thickness of the adhesive layer is generally 20 to 150 *µ*m.

It is preferable to protect the surface of the adhesive layer from pollution with a release sheet. The release sheet is not particularly limited, but for example, is a film of polyethylene terephthalate, polybutylene terephthalate, polyethylene, or polypropylene, polyarylate, or the like, a paper, such as polyethylene laminated paper, polypropylene laminated paper, clay coated paper, resin coated paper, glassine paper, or the like, or the above-mentioned film or paper to which a releasing treatment is applied, if necessary, on a surface to be brought into contact with the adhesive layer.

A typical releasing treatment is, for example, a coating or preparing a releasing agent, such as a releasing agent based on a silicone resin, long-chain alkyl resin, or fluoro-resin. The thickness of the release sheet is not particularly limited, but may be suitably determined.

As in the embodiment shown in Fig. 2, the surface layer 4 may be formed on an outer surface (or the surface side) of the circuit substrate 1 of the adhesive label 10 of the present invention so as to provide it with printability. The surface layer 4 may be a coated paper, a woodfree paper, a synthetic paper, or a film having printability. The surface layer 4 may be stuck to the circuit substrate 1 with an adhesive. The adhesive may be the one mentioned for the adhesive layer 4, a cold setting adhesive, a thermosetting adhesive, or an ultraviolet curing adhesive.

In the data carrier adhesive label of the present invention, the surface layer is preferably opaque to prevent the data carrier element from being seen from the surface, and enhance printability. An opaque paper or film may be used as the surface layer, or a pigment or filler may be dispersed in the adhesive.

The thickness of the adhesive layer for sticking the surface layer is not particularly limited, but is preferably 10 to 100 *µ*m.

The thickness of the surface layer is not particularly limited, but is preferably 25 to 200*µ*m.

### EXAMPLE

The present invention will now be further illustrated by, but is by no means limited to, the following Examples.

### Example 1

On a foamed polyester film (manufactured by Toyobo Co., Ltd.; Crisper-G4712; thickness = 100 *µ*m) used as the circuit substrate, an electric circuit and an antenna (thickness=10 *µ*m) were formed in accordance with a screen printing method, using a silver paste (manufactured by Toyobo Co., Ltd.; Electrically conductive paste DW-250). An IC chip (2.8mm x 2.2mm; thickness = 170*µ*m) was connected with the electric circuit by a flip chip bonding to form a contactless data carrier element on the circuit substrate.

A layer (thickness = 30*µ*m) of an acrylic pressure sensitive adhesive (manufactured by LINTEC Corporation; PAT1) was formed on a release sheet prepared by coating a glassine paper with a silicone resin. The adhesive layer was superposed onto the surface carrying the contactless data carrier element on the circuit substrate to obtain an adhesive label of the present invention. The adhesive label was used to evaluate printability. The results are shown in Table 1.

### Example 2

The procedure described in Example 1 was repeated except that a transparent polyester film (thickness = 100*µ* m) was used as the circuit substrate, to obtain a contactless data carrier adhesive label. Thereafter, a foamed polyester film (manufactured by Toyobo Co., Ltd.; Crisper-G4712; thickness = 50 *µ*m) having a layer (thickness = 20 *µ*m) of an acrylic pressure sensitive adhesive (manufactured by LINTEC Corporation; PA-T1) was stuck to the circuit substrate on a surface which is reverse to the surface carrying the pressure sensitive adhesive to obtain an adhesive label of the present invention. The adhesive label was used to evaluate printability. The results are shown in Table 1.

### Example 3

A copper foil (thickness = 35*µ*m) was adhered on a polyimide film (thickness=75*µ*m; as the circuit substrate), and an electric circuit and an antenna were formed thereon by etching. An IC chip used in Example 1 was connected with the electric circuit by the flip chip bonding as in Example 1 to form a contactless data carrier element on the circuit substrate.

A double-coated tape carrying a pressure sensitive adhesive (manufactured by LINTEC Corporation; PA-T1) having a thickness of 20 *µ*m on one side of a polyester film (thickness = 25 *µ*m), and a pressure sensitive adhesive (manufactured by LINTEC Corporation; PA-T1) having a thickness of 30 *µ*m on the other side thereof was prepared. Then, a release sheet prepared by coating a glassine paper with a silicone resin was stuck to the double-coated tape on the pressure sensitive adhesive layer having a thickness of 20 *µ*m. The circuit substrate was stuck, at the surface carrying the contactless data carrier element, to the double-coated tape on the pressure sensitive adhesive layer having a thickness of 30*µ*m.

A layer (thickness = 20*µ*m) of a colored pressure sensitive adhesive (mixture of 2 parts by weight of carbon black (black pigment) and 98 parts by weight of acrylic pressure sensitive adhesive (manufactured by LINTEC Corporation; PA-T1)] was formed on a foamed polyester film (manufactured by Toyobo Co., Ltd.; Crisper-G4712; thickness = 50*µ*m) by coating, and the resulting film was stuck as a surface layer to the circuit substance on a surface reverse to the surface carrying the contactless data carrier element to obtain an adhesive label of the present invention. The adhesive label was used to evaluate printability. The results are shown in Table 1. The surface layer of the adhesive label prepared in this Example was opaque, and thus the contactless data carrier element was concealed.

### Comparative Example

On a foamed polyester film (manufactured by Toyobo Co., Ltd.; Crisper-G4712; thickness = 100 *µ*m) used as the circuit substrate, an electric circuit and an antenna (thickness = 10*µ*m) were formed in accordance with a screen printing method, using a silver paste (manufactured by Toyobo Co., Ltd.; Electrically conductive paste DW-250). An IC chip (2.8mm x 2.2mm; thickness = 170*µ*m) was connected with the electric circuit by a flip chip bonding to form a contactless data carrier element on the circuit substrate.

A layer (thickness = 30µm) of an acrylic pressure sensitive adhesive (manufactured by LINTEC Corporation; PAT1) was formed on a release sheet prepared by coating a glassine paper with a silicone resin. The adhesive layer was stuck to the circuit substrate on a surface reverse to the surface carrying the contactless data carrier element.

Then, a foamed polyester film (manufactured by Toyobo Co., Ltd.; Crisper-G4712; thickness = 50*µ*m) carrying a layer (thickness = 20*µ*m) of an acrylic pressure sensitive adhesive (manufactured by LINTEC Corporation; PA-T1) was stuck as a surface layer on a surface carrying the contactless data carrier element on the circuit substrate to obtain a comparative adhesive label. The comparative label was used to evaluate printability. The results are shown in Table 1.

### Evaluation of printability

The adhesive label was printed on a surface reverse to the surface carrying the adhesive layer, by a heat transfer printer (manufactured by Zebra Co., Ltd.; 140Xi), and the resulting printing was visually evaluated. An ink ribbon used was B110CX (manufactured by Ricoh Co. Ltd). The evaluation was made from the standpoint of a defacing of the printing, distorted printing, and pin hole into three ratings as follows:
⊚ ··· No defaced printing, no distorted printing, or no pin hole;
○ ··· No defaced printing, no distorted printing, but a pin hole partially occurred;
× ··· No defaced printing, no distorted printing, but a pin hole occurred.

**Table 1**

| | Printability |
|---|---|
| Example 1 | ○ |
| Example 2 | ○ |
| Example 3 | ⊚ |
| Comparative Example | × |

As shown in Table 1, a good printing was obtained without an influence of an irregular or uneven structure due to the electronic components, in the adhesive labels prepared in Examples 1 to 3. In the adhesive label prepared in Comparative Example, however, a resulting printing was influenced by the irregular or uneven structure due to the electronic components, and a pin hole occurred.

### INDUSTRIAL APPLICABILITY

The present invention can provide an adhesive label that is not influenced by an irregular or uneven structure formed by a contactless data carrier element, even though the present adhesive label is thinner than the conventional adhesive label-type contactless data carrier.

Although the present invention has been described with reference to specific embodiments, various changes and modifications obvious to those skilled in the art are deemed to be within the scope of the invention.

## Claims

1. An adhesive label **characterized by** comprising a circuit substrate, electronic components formed on one surface of said circuit substrate, and an adhesive layer on said electronic components for applying to an article, which are sequentially laminated.

2. The adhesive label according to claim 1, wherein said adhesive layer is a pressure sensitive adhesive layer.

3. The adhesive label according to claim 1 or 2, wherein an entire contactless data carrier element containing said electronic components is carried on one side of said circuit substrate, and said adhesive layer for applying on an article is formed on said entire contactless data carrier element.

4. The adhesive label according to any one of claims 1 to 3, wherein a surface layer is provided on a circuit substrate surface that is a reverse side to a surface carrying said electronic components.

5. The adhesive label according to claim 4, wherein electronic components are separately formed on each surface of said circuit substrate and connected with each other by a through-hole to integrate both electronic components to form an entire contactless data carrier element, said adhesive layer for applying to an article is formed on one of said separately formed electronic components, and said surface layer is formed on the other of said separately formed electronic components.

## Patentansprüche

1. Haftetikett, **dadurch gekennzeichnet, dass** es übereinander geschichtet ein Substrat für einen Stromkreis, auf einer Fläche des Substrates ausgebildete elektronische Komponenten und eine Haftschicht auf diesen elektronischen Komponenten zum Aufbringen auf einen Artikel umfasst.

2. Haftetikett nach Anspruch 1, wobei die Haftschicht eine druckempfindliche Haftschicht ist.

3. Haftetikett nach Anspruch 1 oder 2, wobei das gesamte kontaktlose Datenträgerelement, das die elektronischen Komponenten enthält, von einer Seite des Substrats für einen Stromkreises getragen wird und die Haftschicht zum Aufbringen auf einen Artikel auf dem gesamten kontaktlosen Datenträgerelement ausgebildet ist.

4. Haftetikett nach einem der Ansprüche 1 bis 3, wobei eine Oberflächenschicht auf einer Fläche des Substrats für einen Stromkreis vorgesehen ist, welche die Rückseite in Bezug auf eine die elektronischen Komponenten tragenden Fläche ist.

5. Haftetikett nach Anspruch 4, wobei die elektronischen Komponenten separat auf jeder Fläche des Substrats für einen Stromkreis ausgebildet und miteinander über ein Durchgangsloch verbunden sind, um beide elektronischen Komponenten zu integrieren und ein gesamtes kontaktloses Datenträgerelement zu bilden, wobei die Haftschicht zum Aufbringen auf einen Artikel auf einer der separat ausgebildeten elektronischen Komponenten aufgebracht und die Oberflächenschicht auf der anderen der separat ausgebildeten elektronischen Komponenten ausgebildet ist.

## Revendications

1. Etiquette adhésive, **caractérisée en ce qu'**elle comprend un substrat de circuit, des composants électroniques formés sur une surface dudit substrat de circuit, et une couche d'adhésif sur lesdits composants électroniques pour l'application sur un article, qui sont stratifiés de manière séquentielle.

2. Etiquette adhésive selon la revendication 1, dans laquelle ladite couche d'adhésif est une couche d'adhésif sensible à la pression.

3. Etiquette adhésive selon la revendication 1 ou 2, dans laquelle un élément de support de données sans contact complet contenant lesdits composants électroniques est supporté sur un côté dudit substrat de circuit, et ladite couche d'adhésif pour l'application sur un article est formée sur ledit élément de support de données sans contact complet.

4. Etiquette adhésive selon l'une quelconque des revendications 1 à 3, dans laquelle une couche de surface est prévue sur une surface de substrat de circuit qui est un côté opposé à une surface supportant lesdits composants électroniques.

5. Etiquette adhésive selon la revendication 4, dans laquelle des composants électroniques sont formés séparément sur chaque surface dudit substrat de circuit et reliés l'un à l'autre par un trou afin d'intégrer les deux composants électroniques de façon à former un élément de support de données sans contact complet, ladite couche d'adhésif pour l'application sur un article est formée sur un desdits composants électroniques formés séparément, et ladite couche de surface est formée sur l'autre desdits composants électroniques formés séparément.
